# EUROPEAN PATENT SPECIFICATION

(11) **EP 0 722 550 B1**
(45) Date of publication and mention of the grant of the patent: **30.07.1997**
(21) Application number: 95901623.9
(22) Date of filing: 06.10.1994
(51) Int. Cl.: F16L 11/15, F16L 9/147, F16L 58/10

(54) **FLUID LINE**
FLÜSSIGKEITSROHRLEITUNG
LIGNE POUR FLUIDES

(30) Priority: 06.10.1993 NL 9301715
(43) Date of publication of application: 24.07.1996
(73) Proprietor: Anamet Europe B.V., NL-1014 AK Amsterdam (NL); B.V. Handelen Industrie-Mij. Rhenania, 6541 CT Nijmegen (NL)
(72) Inventor: Muffels, Frank Leopold Johannes Maria, NL-6525 ZN Nijmegen (NL)
(74) Representative: Van Breda, Jacobus
(86) International application number: NL9400244
(87) International publication number: WO9509999

(56) References cited:
- DE-C- 816 465
- FR-A- 1 075 364
- GB-A- 921 601

## Description

The present invention relates to a line for conveying fluids, comprising a metal tube and a plastic cover.

Such a line is for example used in underground line systems for conveying fluids.

A line having a peripherally or helically corrugated wall is known from GB-A-921 601. The wall of this known line consists of a metal tube with an external covering and an internal flat metal strip to reduce flow resistance. Due to this construction, the known line shows the disadvantage of being comparatively rigid requiring bending in situ by a bending machine to obtain the proper layout of the line. This involves considerable costs.

It is an object of the invention to provide a line of the type mentioned in the preamble in which this disadvantage is removed in an effective way.

For this purpose, the line according to the invention is characterized in that the cover is attached to the top of the corrugations of the metal tube and that the spacings between the corrugations in the wall of the tube remain free.

By using this flexible metal tubing, a line section of great length can be supplied and transported to the area of use as a coil, which simplifies the installation of the line considerably and also makes it cheaper. Bends in the line can easily be provided, while in the case of subsidence or other forces on the line, it will more readily adapt in shape, thereby reducing the risk of rupture. The plastic cover protects the flexible metal tubing.against mechanical and chemical influences from outside, thereby permitting the use of the line in chlorine containing surroundings, such as sea water. The metal tubing permits the conveyance of fluids for which metal is prescribed in view of permeability, such as is the case with many chemicals and for which reason a tube entirely made of plastic cannot be used.

The adherence of the plastic cover to the top of the corrugations of the metal tube has several advantages. First of all, it counteracts any lengthening of the metal tube under pressure. Furthermore, in the case of an embodiment having ring-shaped corrugations in the wall of the metal tube, compartments are created when there is a leak from the inside. This prevents the fluid from escaping further. In a helical tube, on the other hand, a leak can be detected at the end thereof by measuring the pressure in the space between the metal tube and the plastic cover. This may be used for automatic signalling in the case of a leakage.

In a special embodiment, the plastic cover is disposed onto the metal tube by extrusion, wherein the cover is preferably attached to at least the top of the corrugations of the corrugated metal tube by an adhesive layer. The corrugations in the wall of the metal tube may be ring-shaped or helical. The adherence of the plastic cover to the metal tube may be enhanced further by disposing an epoxy layer between the adhesive layer and the metal tube.

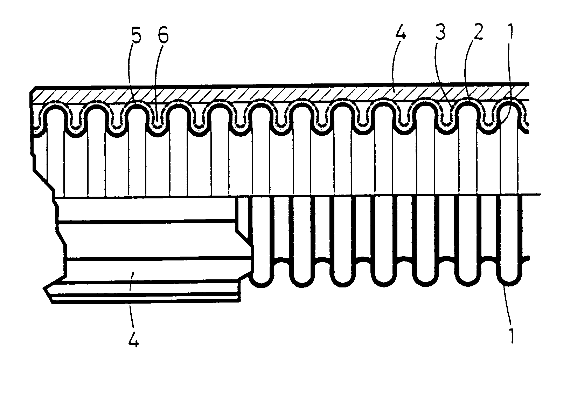

The invention will now be further elucidated with reference to the drawing of which the only figure shows an embodiment of the line according to the invention: partially in side view (below left), partially in side view without plastic cover (below right) and partially in longitudinal section (above).

The drawing schematically shows the exemplary embodiment of the fluid line which is formed of a flexible corrugated metal tube 1, an epoxy layer 2 disposed thereon, an adhesive layer 3 disposed over it and finally a plastic cover 4. For the sake of clarity, the epoxy layer 2 and the adhesive layer 3 are illustrated relatively thicker.

The tube 1 may be made from different metals, such as inconel, stainless steel, bronze etc., depending on the respective application and the fluid to be conveyed. In the present case, the metal tube 1 comprises parallel ring-shaped corrugations 5 with intermediate ring-shaped spacings 6. Alternatively, one or more helical corrugations may be formed in the wall of the tube 1.

The epoxy layer 2 and the adhesive layer 3 are preferably disposed on the inner tube 1 by spraying, wherein the epoxy layer serves to enhance the adherence of the adhesive layer 3. In the case of a thicker epoxy layer, a very good corrosion protection is provided as well, which ensures a better preservation of the whole line. The adhesive layer 3 is intended for the attachment of the plastic cover 4 on top of the corrugations 5 of the metal tube 1, through which adherence the plastic cover 4 counteracts a deformation of the corrugated tube 1 in longitudinal direction when the fluid within the tube 1 is under pressure.

The plastic cover 4 may for example be made of hd, md or ld polyethylene, polypropylene or PVC. Other plastics are conceivable as well, as long they satisfy the requirements of mechanical strength, flexibility, corrosion resistance and extrudibility.

The flexibility of the composite line is still sufficient for the line to be easily bent. Because the spacings 6 between the corrugations 5 of the tube 1 remain free from the plastic of the cover 4, the flexibility is improved. A loose inner tube can be inserted into the metal tube 1 if a double-walled metal tube is prescribed. Connecting couplings can conveniently be mounted on the outer side of the line, with the plastic cover having a sealing function.

The line described hereinbefore and shown in the drawing is suitable for various uses. Because of the metal tube, all kinds of chemicals and gas-like or liquid fluids of chemical and petrochemical industries may be conveyed by the line. Due to the plastic cover 4, this conveyance may take place underground since the cover offers a good protection against corrosion and mechanical influences. The line according to the invention is also very suited for large underground line systems, such as gas lines and lines in sea water environments. The flexibility considerably simplifies the transport and installation of the line compared to rigid line sections.

The invention is not restricted to the embodiment shown in the drawing and described hereinbefore, which may be varied in different manners within the scope of the claims.

## Claims

1. Line for conveying fluids, comprising a flexible corrugated metal tube (1) and a plastic cover (4), **characterized** in that the cover (4) is attached to the top of the corrugations (5) of the metal tube (1) and that the spacings (6) between the corrugations (5) in the wall of the tube (1) remain free.

2. Line according to claim 1, wherein an extruded plastic cover (4) is disposed on the metal tube.

3. Line according to claim 1 or 2, wherein the cover (4) is attached to the metal tube (1) by an adhesive layer (3).

4. Line according to one of claims 1-3, wherein the corrugations (5) in the wall of the metal tube (1) are ring-shaped or helical.

5. Line according to claim 3 or 4, wherein an epoxy layer (2) is disposed between the adhesive layer (3) and the metal tube (1).

## Patentansprüche

1. Rohrleitung zur Fluidförderung, die ein flexibles gewelltes Metallrohr 1 und eine Plastikummantelung 4 enthält, **dadurch gekennzeichnet, daß** die Ummantelung 4 mit den Scheiteln der Wellen 5 des Metallrohres 1 verbunden ist und daß die Zwischenräume 6 zwischen den Wellen 5 in der Wand des Rohres 1 frei bleiben.

2. Rohrleitung gemäß Anspruch 1, **dadurch gekennzeichnet, daß** eine extrudierte Platikummantelung 4 auf dem Matallrohr angeordnet ist.

3. Rohrleitung gemäß Anspruch 1 oder 2, **dadurch gekennzeichnet, daß** die Ummantelung 4 durch eine Klebstoffschicht 3 mit dem Metallrohr 1 verbunden ist.

4. Rohrleitung gemäß einem der Ansprüche 1 bis 3, **dadurch gekennzeichnet, daß** die Wellen 5 in der Wand des Metallrohrs 1 ringförmig oder spiralförmig sind.

5. Rohrleitung gemäß Anspruch 3 oder 4, **dadurch gekennzeichnet, daß** eine Epoxidschicht 2 zwischen der Klebstoffschicht 3 und dem Metallrohr 1 angeordnet ist.

## Revendications

1. Conduite pour le transport de fluides, comportant un tube métallique ondulé flexible (1) et un revêtement (4) de matière plastique, caractérisée en ce que le revêtement (4) est fixé sur le dessus des ondulations (5) du tube métallique (1) et en ce que les espaces (6) entre les ondulations (5) de la paroi du tube (1) restent libres.

2. Conduite selon la revendication 1, dans laquelle un revêtement (4) en matière plastique extrudée est disposé sur le tube métallique.

3. Conduite selon la revendication 1 ou 2, dans laquelle le revêtement (4) est fixé au tube métallique (1) par une couche d'adhésif (3).

4. Conduite selon l'une des revendications 1-3, dans laquelle les ondulations (5) de la paroi du tube métallique (1) ont la forme d'anneaux ou sont hélicoïdales.

5. Conduite selon la revendication 3 ou 4, dans laquelle une couche (2) d'époxy est disposée entre la couche d'adhésif (3) et le tube métallique (1).
